# EUROPEAN PATENT APPLICATION

(11) **EP 4 529 132 A1**
(43) Date of publication of application: **26.03.2025**
(21) Application number: 23306586.1
(22) Date of filing: 22.09.2023
(51) Int. Cl.: H04L 67/12, H04W 4/42, H04W 12/121, B61L 15/00, H04L 9/40, H04L 12/40

(54) **METHOD AND SYSTEM FOR VEHICLE CYBERATTACK EVENT DETECTION**

(71) Applicant: SpeedInnov, 75008 Paris (FR)
(72) Inventor: HOVAERE, Philippe, 17340 CHATELAILLON PLAGE (FR)
(74) Representative: Lavoix

(57) **Abstract**

The invention concerns a method of detection of a cyberattack event in a ground transportation vehicle, the method comprising at least one iteration of the following steps:
- receiving (10), from a sensor, at least one datum representing the opening of a hatch of a maintenance compartment of said ground transportation vehicle, said maintenance compartment comprising at least one digital equipment connected to a main processing unit of said ground transportation vehicle by using a communication network;
- obtaining (20) at least one datum representing a state of said at least one digital equipment;
- determining (30) that said at least one datum representing the state of said at least one digital equipment and said at least one datum representing the opening of said hatch are in discordance with an operation state of said ground transportation vehicle; and
- raising (40) at least one alarm.

## Description

The present invention relates to a method and system for event detection of cyberattack in vehicle. More specifically, the invention relates to a method for detecting a cyberattack in ground public transportation vehicles.

Like any organization, transportation agencies are exposed to the threat of cyberattack, but the stakes may be higher. As part of critical public infrastructure, transportation is uniquely at risk. Most people and businesses depend on transport, whether it's getting to work on time, sending goods or receiving medical supplies. Government agency efforts are helping to raise awareness and lower the chances of harm. Individual transport organizations have also taken on the responsibility of protecting their systems and traveller safety. The risk of attack against transport agencies will certainly continue, and passenger safety is of the utmost importance. If an attack disrupts transportation, entire supply chains could come crashing down. Traffic light or rail transit disruption could cause physical harm.

As parts of the public transportation infrastructures, managed by the transportation agencies, ground transportation vehicles (e.g. trains, subways and buses) are vulnerable targets that could be part of a general cyberattack scenario built by attackers to reach, for example, the main infrastructure of the transportation agencies.

A specific problem arises with ground transportation vehicles. These vehicles, which are also public transport vehicles (train, bus, subways), carry many passengers, who are free to move around. The crew cannot constantly monitor these passengers (when such crew exists). In some situations, e.g. buses and subways, passengers are not supervised nor accompanied by a crew. Therefore, in such situations, it is necessary to ensure that these passengers, or malicious persons among them, do not interfere with the proper functioning of the ground vehicle. Surveillance solutions such as cameras exist. However, these solutions do not allow covering the whole space intended for the passengers (the whole subway car or the whole bus). In the case of trains, even if there are crewmembers in charge of ensuring that the train journey runs smoothly, these crewmembers cannot physically be present in all the places where maintenance areas are set up. An unsolved problem is to allow protecting sensitive digital equipment, which cannot be under the constant surveillance of the crewmembers.

It is therefore necessary to provide a solution that allows protecting the access to sensitive digital equipment that are located inside the ground transportation vehicle and that are accessible to the passengers.

The invention was made by keeping these considerations in mind. More specifically, claim 1, additional dependant, and independent claims define the invention.

The invention will be better understood and other advantages thereof will become clearer in the light of the following description of an embodiment of a method and system for vehicle cyberattack event detection, given by way of example only and made with reference to the appended drawings in which:
- figure 1 is a representation of the method according to the invention.
- figure 2 depicts an illustrative logical view of an implementation of the invention.
- figure 3 discloses an illustrative ground transportation vehicle according to an exemplary embodiment.

The invention thus relates to a method for detecting a potential cyberattack during exploitation of a ground transportation vehicle (e.g. train, tram, bus). This method comprises a step of detecting the opening of a maintenance hatch (also called a trapdoor) of the ground transportation vehicle, the method further comprising a step of detecting an interruption of communications with an electronic device connected to a communication network, this electronic device being itself stored within a compartment that is hidden by the maintenance hatch. A correlation is made between these two different events to detect a possible cyberattack in the ground transportation vehicle with respect to the operation state of the ground transportation vehicle (i.e. a "cruise" or "running" mode versus a "maintenance" mode). The process is built this way for solving the problem of the detection of an attempt of a cyberattack without raising irrelevant alarms. One could have just monitored the opening of the maintenance hatch, but this would lead to raise alarm for potentially malfunctioning sensor, which is not desirable. One could have just monitored, from a main processing unit, the communication loss with the digital equipment, but this would lead to raise alarm for situations where the digital device needs to shut down (for example to reboot) even when the ground transportation vehicle is not under cyberattack. Thanks to the proposed implementation, it is possible to detect not only the opening of the trapdoor but also the correlation between this opening of the trapdoor and a problem of functioning of the electronic device inserted within the trapdoor. Therefore, thanks to this technique, it is possible to warn the people in charge of maintaining security in the ground transportation vehicle, so that they can verify either that it is an error, or that an ill-intentioned person has actually opened the hatch with the aim of altering the functioning of the device inside the hatch. In other words, thanks to this principle, it is possible to detect, easily, attempts to hack the ground transportation vehicle at a lower cost.

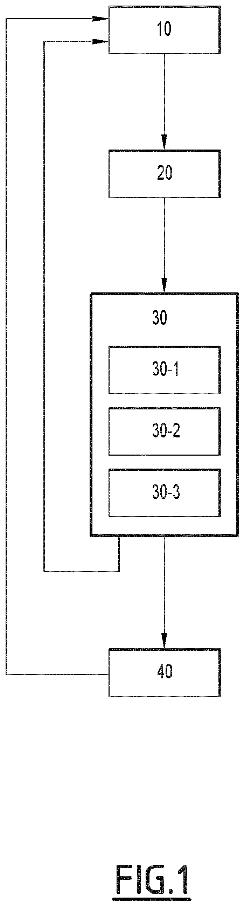

More specifically, the process comprises, in relation with figure 1:
- receiving 10, from a sensor, at least one datum representing the opening of a hatch of a maintenance compartment of the ground transportation vehicle, the maintenance compartment comprising at least one digital equipment connected to a main processing unit of the ground transportation vehicle by using a communication network;
- obtaining 20 at least one datum representing the state of the at least one digital equipment;
- determining 30 that the at least one datum representing the state of the at least one digital equipment and the at least one datum representing the opening of the hatch are in discordance with the operation state of the ground transportation vehicle; and
- raising 40 at least one alarm in the ground transportation vehicle.

As a function of the implementation, determining step 30 may comprise:
- determining 30-1 that the hatch is opened; and
- determining 30-2 that the communication between the at least one digital equipment and the main processing unit is interrupted.

The determining step 30 may further comprise:
- obtaining 30-3 at least one datum representing the operation state of the ground transportation vehicle and determining that the operation state differs from the maintenance state.

The operation state is determined, for instance, from at least one value that is accessible by the main processing unit through a storage unit or a memory unit. The operation state is, for example, configured by an employee in charge of the maintenance of the ground transportation vehicle when it has to be maintained.

The operation state of the ground transportation vehicle is thus coupled to the information obtained from the data on the opening of the hatch and/or the absence of a transmission from the electronic device located inside the housing (closed by this hatch). This allows filtering the alerts sent to the crewmembers. For example, if the ground transportation vehicle is in a maintenance mode (the operation state is "maintenance"), the information on the opening of the hatch and the information on the absence of a communication between the electronic device located inside the housing closed by this hatch and the Main Processing Unit does not generate the implementation of the same alarm as when the ground transportation vehicle is not in maintenance mode. For example, if the ground transportation vehicle is in a "maintenance" mode, no alarm is triggered. For example, if the ground transportation vehicle is in "maintenance" mode, a "secondary" alarm may be triggered (e.g. so that a person in charge of maintenance can get to the hatch, but with less urgency).

Furthermore, in some embodiments, the method also implements the following features.

For instance, in order to avoid untimely triggering of unjustified alarms, the determining step 30 (using the at least one data item representative of the opening of the hatch and the at least one data item representative of the state of the digital equipment) is delayed, for example by implementing said determining step 30 at the end of a timer. A time delay, called a checking delay, is therefore set when the opening of the hatch is detected: it is indeed necessary to open the hatch for accessing the digital equipment, which implies that the opening of the hatch triggers this time delay for checking whether the communication with the digital equipment is lost or not. According to a particular characteristic, this time delay is implemented at the Main Processing Unit (MPU). Thus, when the MPU receives the piece of data representing the opening of the hatch, the time delay is set. Once this delay has elapsed, the MPU checks the state of communication with the electronic device located in the housing protected by the hatch. The purpose of this time delay is to avoid the triggering of false alarms. A false alarm could be the result of a reboot of the digital equipment of the communications network of the ground transportation vehicle. The delay mitigates this situation, by letting the time to this equipment to reboot properly. The duration of this delay is variable depending on the conditions. For example, it can be from a few seconds to a few ten of seconds (e.g. depending on the time that the digital equipment needs to reboot).

If, at the end of the time delay, the hatch is indeed open and the communication with the electronic device located inside the door is lost or disrupted, the MPU may implement a step to protect other devices connected to the computer network located within the ground transportation vehicle. This is to avoid contamination of the network or the device that makes it up, by malicious software, or by other means that could undermine the security or proper functioning of the ground transportation vehicle. With this simple to implement technique, it is therefore possible to protect the essential operating components of the ground transportation vehicle.

In addition, raising of alarms can be dependent on the ground transportation vehicle. For example, if the ground transportation vehicle is a train, travelling at high or very high speed, the alarm can be triggered not only to the train driver, but also to the crewmembers inside the train so that they can intervene at the undesired opening of the hatch and check the situation. The MPU may also raise an alarm to a ground station of the transportation agency.

Other features are also implemented, as a function of the technical implementation of the invention. More specifically, according to a specific feature, the hatch-opening sensor is an inductive sensor. This sensor may provide an 110V signal to the input of a dedicated module, located in an electrical rack of the ground transportation vehicle. This module transforms this electrical signal received from the sensor into a piece of data and transmit this piece of data to the MPU through the communication network of the ground transportation vehicle. The MPU thus uses this piece of data of the opening sensor to determine whether this opening is a potential threat or not. For achieving this result, as explained previously, the operation state of the ground transportation vehicle is considered along with the loss of the communication between the MPU and the digital device protected by the hatch. The use of an inductive sensor is particularly suitable when vibrating conditions are susceptible of occurring, because this kind of sensor allows mitigating the outcomes of such vibrations on the hatch, these outcomes leading to false alarms. These vibrations can occur, for example, when driving at high speed or when a road is not correctly aligned.

In addition, an optional specific short delay (e.g. less than one second), called a hatch delay may also be implemented after receiving, by the MPU, the information representing the opening of the hatch. The purpose of this hatch delay is also to avoid the triggering of false alarms, which would be caused by vibrations that would lead to a malfunction or a disturbance of the hatch-opening sensor. Thus, in this situation, the hatch is considered as being effectively opened after the expiration of this hatch delay.

Then, the hatch having been detected open out of maintenance mode and a loss of communication with the electronics of significant duration occurs, the following actions are executed by the MPU:
- display of a pictogram corresponding to the suspicion of computer intrusion, on the driver console;
- display of a pictogram corresponding to the suspicion of computer intrusion on the crewmember consoles (CDU),
- emission of an audible signal in the ground transportation vehicle (train) to alert the crewmembers,
- emission of an alert to the ground transportation agency, through a communication network.

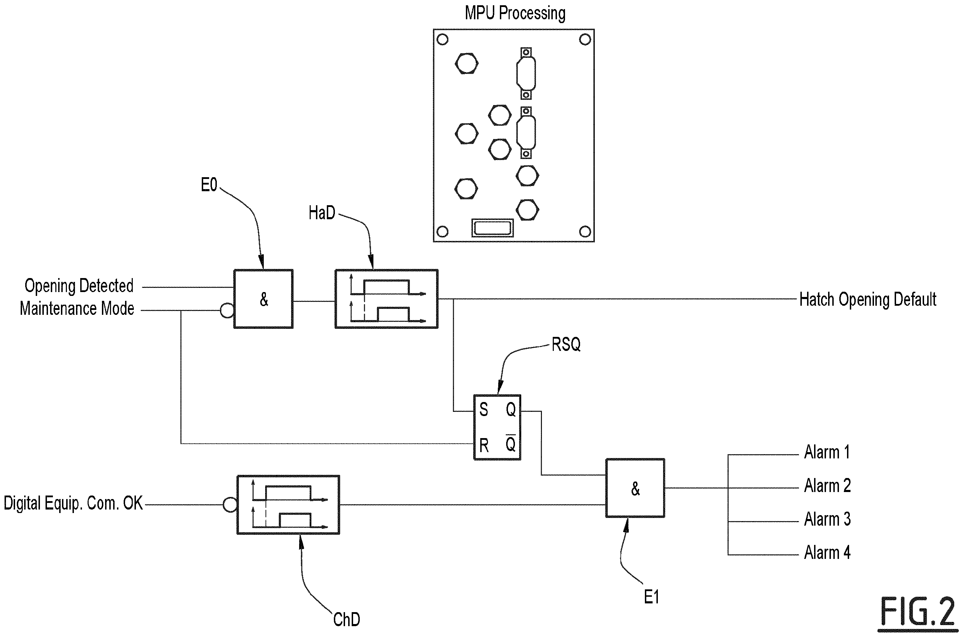

Figure 2 depicts an illustrative logical view of an exemplary implementation of the invention in the MPU. In this exemplary implementation, it is determined E0 that the hatch door is opened and that the ground transportation vehicle operation state is not "maintenance mode". If this situation remains true after a hatch delay HaD, a hatch opening default is logged. The information is available for an RSQ which outputs "true" when it is confirmed that the ground transportation vehicle operation state is not "maintenance mode" and that the hatch door is opened. In this exemplary implementation, after a checking delay ChD elapsed, the absence of communication with the digital equipment is "true", and it is determined E1 that both conditions are "true" for raising one or several of the four available alarms.

In other embodiments, the invention also relates to an apparatus or device for implementing the aforementioned methods. The invention also relates to a ground transportation vehicle comprising a main processing unit, a communication network connected to the main processing unit, at least one hatch of at least one corresponding maintenance compartment, the maintenance compartment comprising at least one digital equipment connected to the communication network. The ground transportation vehicle also comprises a device for the detection of cyberattack as previously described.

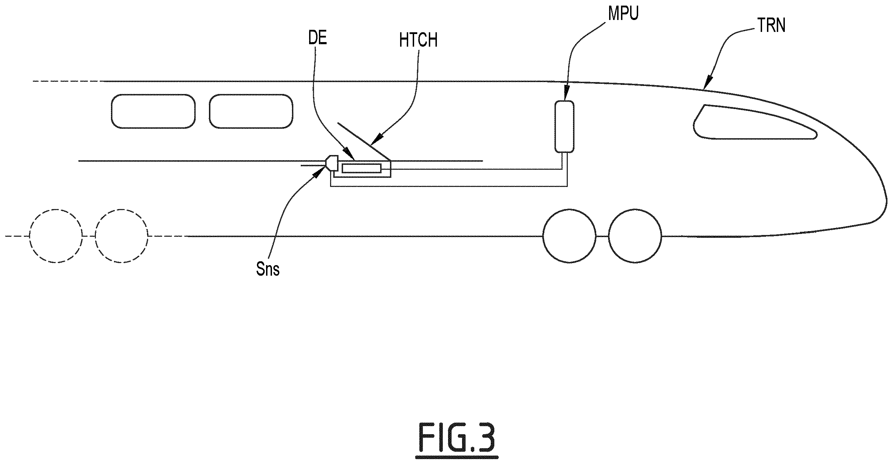

Figure 3 depicts an illustrative embodiment of a train TRN, which is a ground transportation vehicle according to the invention. This train comprise a main processing unit MPU that is connected, through a communication network, to a digital equipment DE. The digital equipment DE is stored within a compartment that is locked by the hatch HTCH. A sensor SnS allows detecting that the hatch HTCH is opened, as illustrated on figure 3. The sensor SnS is also somewhat connected to the MPU. This architecture allows executing the method of detection of a cyberattack that is exposed herein before.

For the implementation of the method, the train TRN includes a main processing unit MPU, a communication network connected to said main processing unit, an hatch HTCH of a maintenance compartment, the maintenance compartment comprising at least one digital equipment DE connected to said communication network and a sensor SnS of the opening state of the hatch and a device for detection of a cyberattack event in a ground transportation vehicle, the device comprising means for iteratively processing:
- means for receiving, from the sensor SnS, at least one datum representing the opening of said hatch HTCH of the maintenance compartment of said ground transportation vehicle, said maintenance compartment comprising said at least one digital equipment DE connected to said main processing unit of said ground transportation vehicle by using said communication network;
- means for obtaining at least one datum representing the state of said at least one digital equipment DE;
- means for determining that said at least one datum representing the state of said at least one digital equipment and said at least one datum representing the opening of said hatch are in discordance with an operation state of said ground transportation vehicle; and
- means for raising at least one alarm.

According to a particular embodiment, the method is performed by a computer program implemented by the data processing unit MPU of the ground transportation vehicle.

The computer program is advantageously stored on a storage medium.

## Claims

1. Method of detection of a cyberattack event in a ground transportation vehicle, the method comprising at least one iteration of the following steps:
- receiving (10), from a sensor, at least one datum representing the opening of a hatch of a maintenance compartment of said ground transportation vehicle, said maintenance compartment comprising at least one digital equipment connected to a main processing unit of said ground transportation vehicle by using a communication network;
- obtaining (20) at least one datum representing a state of said at least one digital equipment;
- determining (30) that said at least one datum representing the state of said at least one digital equipment and said at least one datum representing the opening of said hatch are in discordance with an operation state of said ground transportation vehicle; and
- raising (40) at least one alarm.

2. The method according to claim 1 wherein receiving (10), from a sensor, said at least one datum representing the opening of said hatch comprises:
- receiving, by an input/ouput module, from said sensor, an electric signal representing said opening;
- transforming, by said input/ouput module, said electric signal into a digital datum;
- transmitting said digital datum to said main processing unit of said ground transportation vehicle by using said communication network of said ground transportation vehicle.

3. The method according to claim 1 or 2 wherein said at least one datum representing the state of said at least one digital equipment is determined by monitoring a communication link between said at least one digital equipment and said main processing unit (MPU) of said ground transportation vehicle.

4. The method according to any one of the preceding claims wherein determining (30) that said at least one datum representing the state of said at least one digital equipment is in discordance with said at least one datum representing the opening of said hatch comprises:
- determining (30-1) that said hatch is opened; and
- determining (30-2) that the communication between said at least one digital equipment and said a main processing unit is interrupted.

5. The method according to any one of preceding claims wherein determining (30) that said at least one datum representing the state of said at least one digital equipment is in discordance with said at least one datum representing the opening of said hatch comprises obtaining (30-3) at least one datum representing the operation state of said ground transportation vehicle and determining that said operation state differs from a maintenance state.

6. The method according to any one of the preceding claims wherein determining (30) that said at least one datum representing the state of said at least one digital equipment and said at least one datum representing the opening of said hatch are in discordance with the operation state of said ground transportation vehicle is implemented at the end of a timer, said timer being set once said at least one datum representing the opening of an hatch indicates that said hatch is opened.

7. A device for detection of a cyberattack event in a ground transportation vehicle (TRN), the device comprising means for iteratively processing:
- means for receiving, from a sensor (SnS), at least one datum representing the opening of a hatch (HTCH) of a maintenance compartment of said ground transportation vehicle, said maintenance compartment comprising at least one digital equipment (DE) connected to a main processing unit (MPU) of said ground transportation vehicle by using a communication network;
- means for obtaining at least one datum representing the state of said at least one digital equipment;
- means for determining that said at least one datum representing the state of said at least one digital equipment and said at least one datum representing the opening of said hatch are in discordance with an operation state of said ground transportation vehicle; and
- means for raising at least one alarm.

8. A ground transportation vehicle (TRN) comprising a main processing unit (MPU), a communication network connected to said main processing unit, a hatch (HTCH) of a maintenance compartment, the maintenance compartment comprising at least one digital equipment (DE) connected to said communication network, the ground transportation vehicle being **characterized in that** it comprises at least one device according to claim 7.

9. The ground transportation vehicle of claim 8 **characterised in that** it is a train.

10. A computer program product stored on a storage medium and configured to perform the method according to any one of claims 1 to 6 during operation on a data processing system.
